# EUROPEAN PATENT SPECIFICATION

(11) **EP 3 589 913 B1**
(45) Date of publication and mention of the grant of the patent: **18.05.2022**
(21) Application number: 18710084.7
(22) Date of filing: 27.02.2018
(51) Int. Cl.: F41J 2/00, G01S 7/497, H01Q 15/16, G01S 7/40, G01S 17/87

(54) **APPARATUS AND SYSTEM FOR ASSESSING OR MEASURING THE CAPABILITY OF SITUATIONAL AWARENESS SENSORS**
VORRICHTUNG UND SYSTEM ZUR BEURTEILUNG ODER MESSUNG DER FÄHIGKEIT VON SITUATIONSBEWUSSTSEINSSENSOREN
APPAREIL ET SYSTÈME POUR ÉVALUER OU MESURER LA CAPACITÉ DE CAPTEURS DE CONSCIENCE DE SITUATION

(30) Priority: 28.02.2017 FI 20175186
(43) Date of publication of application: 08.01.2020
(73) Proprietor: Kongsberg Maritime Finland Oy, 26100 Rauma (FI)
(72) Inventor: JOKIOINEN, Esa, 20900 Turku (FI); SOLBERG, Kenneth, 6017 Ålesund (NO)
(74) Representative: Papula Oy
(86) International application number: PCT/FI2018/050144
(87) International publication number: WO 2018/158502

(56) References cited:
- DE-A1-102016 008 689
- GB-A- 2 350 002
- US-A1- 2015 048 572

## Description

### BACKGROUND

Unmanned, i.e. autonomous or remote-controlled, marine vessels are vessels that sail at sea without any crew onboard. Unmanned marine vessels can operate controlled remotely by a human or autonomously, the idea being to replace human operators onboard with automation technologies. In order to allow this, a variety of sensors may be arranged at the vessel to detect and observe the ship status, operation of the various systems of the vessel, fault situations, the behavior of the vessel and its cargo, motions of the vessel, the environment of the vessel, waves, weather conditions, other sea traffic for avoidance of collisions etc. The sensors may provide situational awareness data for the vessel. The situational awareness data may be provided to a control system of the vessel, which may be situated within the vessel or remotely, e.g. ashore. Further, such situational awareness data may be very useful also for vessels that are manned.

An operator controlling the vessel, either on the vessel or remotely, may have a need to evaluate the performance and capability of the situational awareness sensors in order to be able to trust them and the situational awareness data provided. For instance, the operator should be able to determine whether no objects are detected in the vicinity because there are no objects, whether the conditions are so poor that the sensors are not capable of detecting them, or whether there is a sensor malfunction. Another possible scenario is when sensor data interpretation may become problematic, because some of the sensors are partially out of position, but still overlapping such that a common reference point is used to keep the sensor georeferenced towards each other.

DE 10 2016 008689 describes a sensor calibration target 1 having three triangular surfaces.

US 2015/048572 describes a buoyant target or ship decoy comprising an inflatable structure. A laser reflector member is attached to the exterior surface of the inflatable structure.

GB 2 350 002 describes a method of co-boresighting a radar antenna with an associated tracking sensor and radar antenna and associated tracking sensor apparatus which are both mounted on a marine vessel.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

An apparatus for assessing and/or measuring the capability of at least two different situational awareness sensors is disclosed. The at least two situational awareness sensors may comprise at least two of a lidar sensor, a camera, a thermographic camera or a night vision camera. The apparatus may have a face having at least two areas formed of at least two different materials, wherein the at least two materials have reflectivity spectra that differ from each other with respect to at least one wavelength or at least one wavelength range within the infrared, visible and/or ultraviolet electromagnetic radiation range, the at least two areas thereby being configured to reflect incident electromagnetic radiation within the infrared, visible and/or ultraviolet range to the at least two sensors, at least a part of the reflected electromagnetic radiation being detectable by the at least two sensors. The at least two different materials may have thicknesses of at least 0.5 mm.

Many of the attendant features will be more readily appreciated as the same become better understood by reference to the following detailed description considered in connection with the accompanying drawings.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Figure 1A is a perspective view of an embodiment of the apparatus;
Figure 1B is a cross-sectional view of the embodiment shown in FIG. 1A;
Figure 2A is a perspective view of an embodiment of the apparatus;
Figure 2B is a cross-sectional view of the embodiment shown in FIG. 2A;
Figure 3 is a schematic view of a situational awareness system and vessel;
Figure 4 shows a computing apparatus according to an embodiment as a functional block diagram; and
Figure 5 illustrates the reflectance spectra of certain materials.

### DETAILED DESCRIPTION

The detailed description provided below in connection with the appended drawings is intended as a description of a number of embodiments and is not intended to represent the only forms in which the embodiments may be constructed, implemented, or utilized.

An apparatus for assessing and/or measuring the capability of at least two different situational awareness sensors is disclosed. The at least two situational awareness sensors comprise at least two of a lidar sensor, a camera, a thermographic camera or a night vision camera. The apparatus has a face having at least two areas formed of at least two different materials, wherein the at least two materials have reflectivity spectra that differ from each other with respect to at least one wavelength or at least one wavelength range within the infrared, visible and/or ultraviolet electromagnetic radiation range, the at least two areas thereby being configured to reflect incident electromagnetic radiation within the infrared, visible and/or ultraviolet range to the at least two sensors, at least a part of the reflected electromagnetic radiation being detectable by the at least two sensors. The at least two different materials have thicknesses of at least 0.5 mm.

Autonomous vessels, as well as other vessels, may have a need to (self-) evaluate the functionality and capability or performance of their situational awareness. Sensors such as cameras, lidar sensors, etc. may degrade or be hampered by external conditions or have different capabilities depending on e.g. their maturity in software and/or in hardware. Sensors may also be misplaced from their location or move out of alignment.

At least two, or at least three, or at least four different situational awareness sensors may be used. The sensors may be selected such that at least one of the sensors may be capable of providing situational awareness data at any given time point and/or at any given external conditions. For example, when there are at least four different situational awareness sensors comprising a lidar sensor, a camera, a thermographic camera and a night vision camera, at least one of them is typically capable of providing situational awareness data regardless of the amount of ambient light, the presence of rain, snow, fog, mist, dirt etc.

As the dimensions of the apparatus, of the one or more faces and the at least two areas are known (predetermined), a situational awareness system may determine and/or calculate the capability of the situational awareness sensors based on the response of the sensors to the reflected electromagnetic radiation. As the at least two different materials have reflectivity spectra that differ from each other with respect to at least one wavelength or at least one wavelength range within the infrared, visible and/or ultraviolet electromagnetic radiation range, they reflect a different spectrum of electromagnetic radiation to the sensors, such that the sensors can detect the at least two, or three, areas based on the difference in reflectivity.

In an embodiment, the apparatus is passive. In other words, it does not comprise a source of electromagnetic radiation configured to emit electromagnetic radiation within the infrared, visible and/or ultraviolet electromagnetic radiation range. Instead, the apparatus is capable of reflecting, but not actively emitting, the electromagnetic radiation.

The apparatus may also be used for calibrating the situational awareness system and the sensors, in particular for the determination of a distance between an object and the sensor(s) and/or the vessel. This is possible when the distance between the apparatus and the sensor(s)/vessel is known or predefined.

The risk of the sensor (s) being spoofed may also be mitigated.

The term "situational awareness sensor" or "situational awareness system" may refer to any sensor or system capable of providing information that can be used for rendering data information about the current situation of the vessel. Various examples of suitable situational awareness sensors and systems are provided below. The terms "sensor" and "situational awareness sensor" are used interchangeably in this specification.

The term "capability of the sensor" may refer to the capability of the sensor to detect relevant information for situational awareness, e.g. the presence and distance of an object within the range of the sensor.

The term "lidar sensor" or "LIDAR sensor" may refer to a sensor capable of measuring distance to an object by detecting laser light reflected from the object. The lidar sensor may comprise a laser light source or be a part of a lidar system comprising a laser light source. A lidar sensor may be capable of detecting electromagnetic radiation within the ultraviolet, visible and/or near infrared range. Thus the term "laser light" may refer to electromagnetic radiation within the ultraviolet, visible and/or near infrared range. For example, lidar sensors may be 3D laser scanners, specifically designed for real-time applications, such as sensors sold under the trade name Neptec OPAL^{™}. The capability of a lidar sensor may be reduced by condensation in parts of the lidar sensor, e.g. lense. Dense fog and other external factors may also reduce the capability of lidar sensors.

The term "thermographic camera" may refer to a camera capable of detecting electromagnetic radiation within the infrared and/or near infrared range. A thermographic camera, as other cameras, may be capable of forming an image using the electromagnetic radiation it is capable of detecting. Thermographic cameras are also commonly referred to as thermal cameras. Examples of suitable thermographic cameras may be e.g. FLIR cameras. Dense fog, rain and snow in particular may reduce the capability of thermographic cameras.

The term "camera" may refer to a sensor device capable of detecting electromagnetic radiation within the visible spectrum. The camera may be capable of forming an image using the electromagnetic radiation it is capable of detecting. The camera may have high resolution, e.g. a HD-SDI camera, although cameras with various other digital video interfaces and other technologies may also be contemplated. Dense fog, rain and snow in particular may reduce the capability of cameras.

The term "night vision camera" may refer to a camera capable of detecting electromagnetic radiation of visible, near infrared and/or infrared ranges at low intensity, e.g. levels approaching total darkness. A night vision camera may detect ambient electromagnetic radiation or electromagnetic radiation provided by an infrared light source. Dense fog, rain and snow in particular may reduce the capability of night vision cameras.

The at least two, or at least three, or at least four situational awareness sensors may also comprise a radar.

The term "reflectivity" may refer to the ratio of the flux reflected to the flux incident on a surface. The term "reflectivity spectrum" may refer to reflectivity as a function of wavelength. The materials may be selected such that there is a contrast between the at least two areas detectable by the sensors, and/or such that the at least two areas are of different colours. As a further example, the at least two materials may be selected such that a first material has a greater reflectivity than a second material within a first wavelength range, e.g. within at least a part of the infrared or ultraviolet range, and the second material has a greater reflectivity than the first material within a second wavelength range, e.g. within at least a part of the visible range. Thus the two materials, and thereby the two areas, have different reflection "signatures" and thereby may elicit different responses from the sensors. The materials may also be selected such that the intensity of the radiation reflected is not too high to blind the sensors.

Electromagnetic radiation having a wavelength within the range of about 10 to about 400 nm may be considered to be ultraviolet radiation. Electromagnetic radiation having a wavelength within the range of about 400 to about 700 nm may be considered to be visible light. Electromagnetic radiation having a wavelength within the range of about 700 nm to about 1 mm may be considered to be infrared radiation.

In the context of this specification, the term "surface" may refer to the outer boundary of an artifact, such as an apparatus, or a material layer or block constituting or resembling such a boundary. A surface may include not only the outer edge of a material, but also an outermost portion or layer of a material. A surface may have a thickness.

As the materials may have thicknesses of at least 0.5 mm, the degradation of the properties of the apparatus can be reduced or eliminated as opposed to e.g. a thin layer or coating, which can degrade in time, wear off or be peeled off. Minor wear or erosion of the materials does not necessarily significantly affect the reflectivity of the materials. The at least two different materials, or in some embodiments at least three different materials, may have thicknesses of at least 1 mm. They may, in some embodiments, have thicknesses of at least 1.5 mm, or at least 2 mm, or at least 5 mm, or at least 10 mm, or at least 20 mm. However, the thicknesses of individual materials may differ from each other.

The apparatus has a face having at least three areas formed of at least three different materials, wherein the at least three materials have reflectivity spectra that differ from each other with respect to at least one wavelength or at least one wavelength range within the infrared, visible and/or ultraviolet electromagnetic radiation range, the at least three areas thereby being configured to reflect incident electromagnetic radiation within the infrared, visible and/or ultraviolet range to the at least two situational awareness sensors, at least a part of the reflected electromagnetic radiation being detectable by the at least two sensors.

The at least two materials may comprise at least two of copper, aluminium, gold, silver, or any combinations or alloys thereof, plexiglas, hybrid pigmentation, dielectric coating material, or a phase-conjugate mirror material. These materials are examples of materials suitable for reflecting electromagnetic radiation at a wavelength range and intensity suitable for e.g. lidar sensors, cameras, and/or thermographic cameras. The copper, aluminium, gold, silver and/or any combination or alloy thereof may be polished.

The at least two materials may comprise at least two of copper, aluminium, gold, silver, or any combinations or alloys thereof.

Gold is malleable and ductile, and can be made into relatively thin sheets. Gold has a high reflectivity for yellow and red light in particular and for radiation within the infrared range.

Aluminium is less costly and readily available. Being relatively soft, durable and malleable, it can be cast or drawn into desired shape. Aluminium has a relatively high reflectivity at the infrared, visible and ultraviolet ranges.

Silver has a high reflectivity over the infrared, visible and ultraviolet ranges.

The term "plexiglas" may refer to the synthetic polymer poly(methyl methacrylate) (PMMA). Plexiglas is a transparent thermoplastic, which typically transmits up to 92 % of visible light (at a 3 mm thickness). However, it has a higher reflectivity at the ultraviolet range, in particular longwave ultraviolet range. Plexiglas can be provided as a sheet of a suitable thickness.

The term "hybrid pigmentation" may refer to various types of pigment coatings or materials containing fibrous clay and one or more dyes. Examples of suitable fibrous clays are e.g. palygorskite or sepiolite. Hybrid pigmentation materials have a high reflectivity within the infrared and/or near infrared range.

Dielectric coatings may include materials with different refractive indexes, e.g. magnesium fluoride, calcium fluoride, or various metal oxides, deposited on an optical substrate. The reflectivity and transitivity of a dielectric coating may depend e.g. on the composition, thickness and number of layers.

The term "phase-conjugate mirror material" may refer to any material that may function as a phase-conjugate mirror. Phase-conjugate mirror materials are retroreflective, i.e. capable of reflecting light back towards its source with minimal scattering.

The apparatus is suitable for assessing and/or measuring the capability of at least three situational awareness sensors comprising a night vision camera and at least two of a lidar sensor, a camera and a thermographic camera; and the face has at least three areas formed of at least three materials, wherein at least one of the at least three materials is configured to reflect electromagnetic radiation of a wavelength range and at an intensity that is detectable by the night vision camera. The at least one of the at least three materials may have a higher reflectivity than the other materials of the at least three materials. It may therefore be capable of reflecting low intensity electromagnetic radiation at a sufficient amount to be detectable by the night vision camera, even in conditions of low light, such as during the nighttime.

The at least one material configured to reflect electromagnetic radiation of a wavelength range and at an intensity that is detectable by the night vision camera may be retroreflective and/or luminescent. For example, the at least one material configured to reflect electromagnetic radiation of a wavelength range and at an intensity that is detectable by the night vision camera may comprise or be at least one of radium strip, 3M reflector, or any combination thereof. These materials are capable of reflecting electromagnetic radiation at low levels of ambient light at a sufficient intensity for a night vision camera to detect. Yet the intensity of the radiation reflected is not too high to blind a night vision camera.

The term "radium strip" may refer to retroreflective material, in particular in the form of a retroreflective sticker or tape. Such materials are commercially available.

The term "3M reflector" may refer to retroreflective material, in particular to retroreflective or other reflective materials sold under the trade name 3M or Scotchlight.

The at least one material configured to reflect electromagnetic radiation of a wavelength range and at an intensity that is detectable by the night vision camera may have a thickness of at least 0.5 mm. In some embodiments, it may have a thickness of at least 1 mm, at least 1.5 mm, at least 2 mm, at least 5 mm, at least 10 mm, or at least 20 mm. However, in an embodiment, it may also have a thickness that is smaller than 0.5 mm, e.g. when it is present as a thin layer or coating.

In an embodiment, the apparatus comprises a plurality of lateral faces, each lateral face having the at least two or three areas formed of the at least two or three different materials; wherein the dimensions of each of the lateral faces are the same, and the dimensions and the locations of at least two or three areas at each lateral face are the same. In other words, each of the lateral faces may have the same height and width, and each of the at least two or at least three areas may have the same height and width across the lateral faces; however, each of the at least two or three areas of the different materials at a single lateral face do not necessarily have the same dimensions. The location (position) of each of the areas at each lateral face may also be the same. In other words, each of the lateral faces has the same, known or predefined, geometry.

The apparatus may further have a generally rectangular, pentagonal or hexagonal cross-section. Such apparatuses may have four, five or six lateral faces of the same dimensions. Such apparatus comprise a plurality of lateral faces that are visible from all directions.

The apparatus may further comprise means for de-icing and/or cleaning the apparatus, in particular the face having the at least two three areas. The means may comprise e.g. a suitable apparatus configured to de-ice and/or clean the apparatus, such as a heating apparatus and/or an apparatus for removing dirt and/or stains.

A situational awareness system is also disclosed. The situational awareness system may comprise at least two, or at least three, or at least four different situational awareness sensors; and an apparatus according to one or more embodiments described in this specification. The situational awareness sensors may be any sensors or combination of sensors described in this specification. The system may comprise one or more apparatuses for assessing and/or measuring the capability of at least two different situational awareness sensors, which apparatuses may be similar or different, and which may be disposed in different locations with respect to the sensors. It is possible for the situational awareness system to comprise two or more apparatuses having different shapes or geometries. For example, it is possible to e.g. provide apparatuses of different sizes for vessels of different sizes (e.g. a larger apparatus on a large vessel and a smaller apparatus on a smaller vessel) or different shapes or geometries that indicate the type of vessel. Alternatively or additionally, it is possible to provide apparatuses of different sizes or geometries at fixed locations or at different fixed locations, e.g. ashore or on a buoy.

The situational awareness system may further comprise a vessel, or one or more vessels. The situational awareness sensors may be disposed on the vessel.

In an embodiment, the apparatus for assessing and/or measuring the capability of the at least two different situational awareness sensors is disposed at a fixed location, such as ashore and/or on a buoy. Additionally or alternatively, the apparatus may be disposed on the same vessel as the situational awareness sensors.

In an embodiment, the situational awareness system further comprises a computing apparatus comprising: at least one processor, and at least one memory comprising computer program code, the at least one memory and the computer program code configured to, with the at least one processor, cause the computer to at least perform: receive data from the at least two sensors; and calculate the capabilities of the at least two sensors based on the data.

As the size, dimensions, pattern etc. of the apparatus are known, the situational awareness system may be capable of assessing, measuring and/or calculating the capabilities of the sensors based on the response.

The situational awareness system may be calibrated against the beacon in suitable conditions. Thus the capability and response of each sensor may be known e.g. at a maximum detection range in given conditions and may be used as a reference for assessing and/or measuring the capability of the sensors.

A vessel comprising an apparatus according to one or more embodiments described in this specification or the situational awareness system according to one or more embodiments described in this specification is also disclosed. The term "vessel" may refer to a marine vessel, i.e. to a water-borne ship or boat. The vessel may be manned or unmanned, i.e. autonomous or remote-controlled.

A method for assessing and/or measuring the capability of at least two different situational awareness sensors is also disclosed. The at least two situational awareness sensors may comprise at least two of a lidar sensor, a camera, a thermographic camera or a night vision camera. The method comprises detecting by at least two different situational awareness sensors at least a part of electromagnetic radiation within the infrared, visible and/or ultraviolet range reflected by an apparatus according to one or more embodiments described in this specification; receiving data from the at least two different situational awareness sensors, and assessing and/or measuring the capability of the at least two situational awareness sensors based on the received data.

The capabilities of the at least two sensors may be calculated based on the received data. The situational awareness sensors may be any situational awareness sensors described in this specification or any combination thereof. The results of the assessment and/or measurements may be provided to an operator, who may be remote.

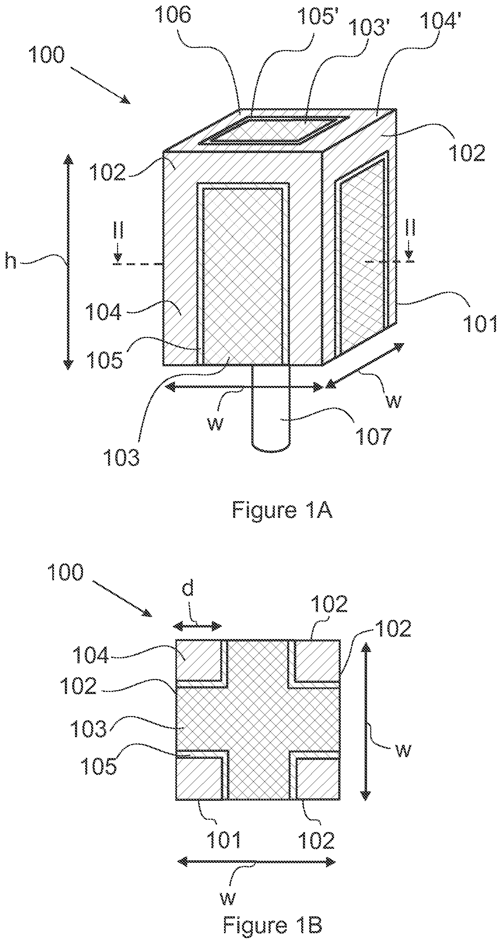

FIG. 1A illustrates an apparatus 100 according to an embodiment. The apparatus 100 comprises or is a visible object or block 101 of a generally parallelepiped shape, in this embodiment a rectangular parallelepiped. In this embodiment, the apparatus 100 has the same cross-sectional shape throughout its height h. The height h of the apparatus 100 or of the block 101 may be equal to its width w, in which case the apparatus 100 is of a generally cubical shape. The height h may also be greater or smaller than the width w. The height h and the width w may be e.g. in the range of 20 cm to 200 cm, or 50 cm to 100 cm, but smaller and/or larger dimensions may also be contemplated, depending e.g. on the distance of the apparatus 100 from the situational awareness sensors and/or the resolution(s) of the sensors.

The apparatus 100 has at least one face 102, in this embodiment four lateral faces 102, two of which are visible in this perspective view, and a top face 106. The lateral faces 102 are all rectangular. The lateral faces 102 are vertical. The lateral faces 102 are also planar in this embodiment, but they may also be non-planar, e.g. curved. Each lateral face 102 has three areas or regions 103, 104 and 105 formed of different materials. However, each lateral face 102 could, alternatively, have two, four or more areas formed of different materials. A rectangular first area 103 extends along at least a part of the height h from the bottom of the lateral face 102 towards the top face 106. In this embodiment, the first area 103 does not extend along the full height h of the face 102, but in other embodiments it could extend along the full height h. A second area 104 surrounds the first area 103. A third area 105 extends between the first area 103 and the second area 104. Although in this embodiment there are a plurality of lateral faces 102, the apparatus may in other embodiments comprise e.g. only one or two of the faces having the at least two areas.

The lateral faces 102 all have the same geometry, i.e. the widths w of each lateral face 102 are equal, as are the heights h of each lateral face 102. Further, the dimensions (heights, widths and shapes) of the areas 103, 104 and 105 are equal at each lateral face 102.

The top face 106 may also have corresponding areas 103', 104' and 105', which may or may not have the same dimensions as the corresponding areas 103, 104 and 105 in the lateral faces. In embodiments in which the apparatus 100 is of a generally cubical shape, the top face 106 may also have the same geometry as the lateral faces 102.

The first and second areas 103, 104, 103', 104' are formed of different materials, i.e. a first and a second material having different reflectivity spectra, such that they are configured to reflect incident electromagnetic radiation of at least one wavelength or wavelength range within the infrared, near infrared, visible and/or ultraviolet range. For example, the first areas 103, 103' may be formed of polished copper as the first material, and the second areas 104, 104' may be formed of polished aluminium as the second material, or vice versa. Other suitable materials could be any other materials described in this specification. The third area 105, 105' may be, but is not necessarily, present as a thin strip. The third area 105, 105' may be formed of a material having a higher reflectivity than the other two materials. The third material is thereby configured to reflect electromagnetic radiation of a wavelength range at an intensity that is detectable by a night vision camera. Examples of such materials may include e.g. retroreflective materials, such as radium strip or 3M reflector(s).

The apparatus may further comprise a support member 107, for instance a base or a mount on which the block 101 may be mounted. In this embodiment, the support member 107 is a pole, the length of which may depend e.g. on the location of the apparatus 100 with respect to the sensors, the size of the apparatus 100 and the block 101, and/or other factors. The apparatus 100 may also be configured to rotate about its vertical axis, the vertical axis being the axis of the apparatus extending in the direction of the height h.

FIG. 1B is a cross-section II-II of FIG. 1A. The first area 103 is defined at the surface of each face 102 by the first material, which is present as a solid piece or block extending through the entire block 101, i.e. along the entire width w. In this embodiment, the thickness of the first material is thus equal to the width w of the lateral face 102. The second material defining the second area 104 at the surface of the lateral face 102 is also, in this embodiment, present as a solid piece or block. The thickness d of the second material forming the second area 104 is smaller than the width w of each of the lateral faces 102. The thickness d may be e.g. at least 0.5 mm or greater. The thickness of the third material forming the third area 105 at the surface of the lateral face 102 may be greater than the thickness d of the second material. In this exemplary embodiment, the block 101 thus consists of the three materials.

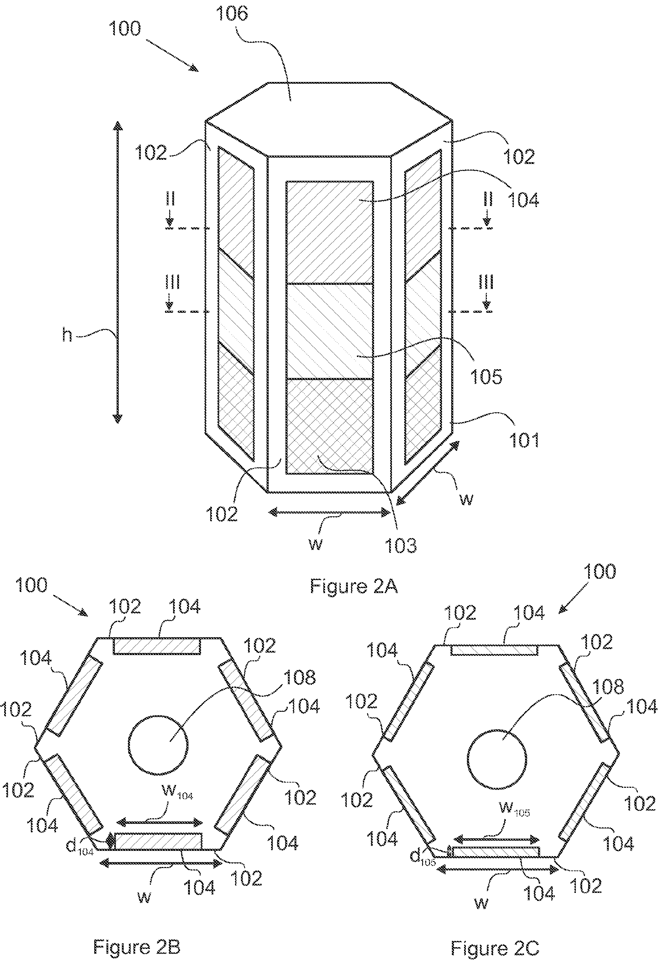

The exemplary embodiment of the apparatus 100 shown in FIGs. 2A to 2C differs from that of FIGs. 1A to 1B at least in that the general shape of the apparatus 100 and the block 101 is a hexagonal prism, i.e. it has six lateral faces 102, all of which have the same height h and width w. Again, in this embodiment, the apparatus 100 has the same, i.e. hexagonal, cross-sectional shape throughout its height h. However, other cross-sectional shapes could also be contemplated, for example triangular, pentagonal, heptagonal or octagonal. In other words, the apparatus 100 (and the block 101) could also have the general shape of a triangular, pentagonal heptagonal or octagonal prism. The apparatus 100 has a plurality of faces 102, in this embodiment six lateral faces 102, three of which are visible in this perspective view, and a top face 106. In this embodiment, the lateral faces 102 are all rectangular and vertical.

Each lateral face 102 has three areas 103, 104 and 105 formed of different materials. In this embodiment, the three areas 103, 104 and 105 do not cover the entire surface of the lateral face 102, although in other embodiments they could. However, each lateral face 102 could, alternatively, have two, four or more areas formed of different materials. In this embodiment, the three materials forming the areas 103, 104, 105 are embedded in the block formed mainly of a fourth material, which may or may not have reflective capabilities.

The three areas 103, 104, 105 are disposed one on the other in the vertical direction. The first area 103, the second area 104 and the third area 105 are, in this embodiment, rectangular and of similar dimensions, although other shapes and dimensions may well be contemplated. For instance, the areas 103, 104, 105 could have independently rectangular, round, regular or irregular polygonal, and/or irregular shape(s). The lateral faces 102 all have the same geometry, i.e. the widths w of each lateral face 102 are equal, as are the heights h of each lateral face 102. Further, the dimensions (heights, widths and shapes) of the areas 103, 104 and 105 at each lateral face 102 are equal.

In this embodiment, the top face 106 does not have corresponding areas formed of the three materials, although in some embodiments it could have.

The first and second areas 103, 104, 103', 104' are again formed of different materials. The materials may be any materials described in this specification.

FIG. 2B is a cross-section II-II of FIG. 2A. The material forming the second area 104 is present as a solid piece, such as a layer or block, of thickness d₁₀₄ and of width w₁₀₄. The thickness d₁₀₄ may refer to the thickness of the material as measured from the surface of the face 102 towards the inside of the apparatus in the lateral direction.

The apparatus 100 may comprise means for de-icing and/or cleaning the apparatus. Such an apparatus may be self-cleaning. In this exemplary embodiment, the apparatus 100 comprises a heating apparatus 108 configured to heat the apparatus 100 and in particular the lateral faces 102, such that the accumulation of ice, water and/or mist on the apparatus 100 and in particular on the lateral faces 102 may be reduced, or any accumulated ice, water and/or mist may be removed. A similar heating apparatus 108 could also be provided e.g. in the apparatus described in FIGs. 1A and 1B. However, the presence of a heating apparatus 108 may increase the relative heat signature of the apparatus and may therefore affect the response(s) of the sensor(s), e.g. the response of a thermal camera and possibly of other sensors.

FIG. 2C is a cross-section III-III of FIG. 2A, i.e. a cross-section at a different height than the cross-section shown in Fig. 2B. The width w₁₀₅ of the third area 105 is the same as the width w₁₀₄ of the second area. The thickness d₁₀₅ of the third area 105 may, however, vary regardless of the other dimensions of the areas. In this embodiment, the thickness d₁₀₅ of the third area 105 is smaller than the thickness d₁₀₄ of the second area 104 shown in FIG. 2B. Further, the thickness d₁₀₅ of the third area(s) 105 may be greater, smaller or equal to 0.5 mm. For instance, the third material forming the areas 105 could, in some embodiments, be present as a thin layer or coating.

Other aspects of the embodiment shown in FIGs. 2A to 2C may be generally similar to those of the embodiments shown in FIGs. 1A to 1B.

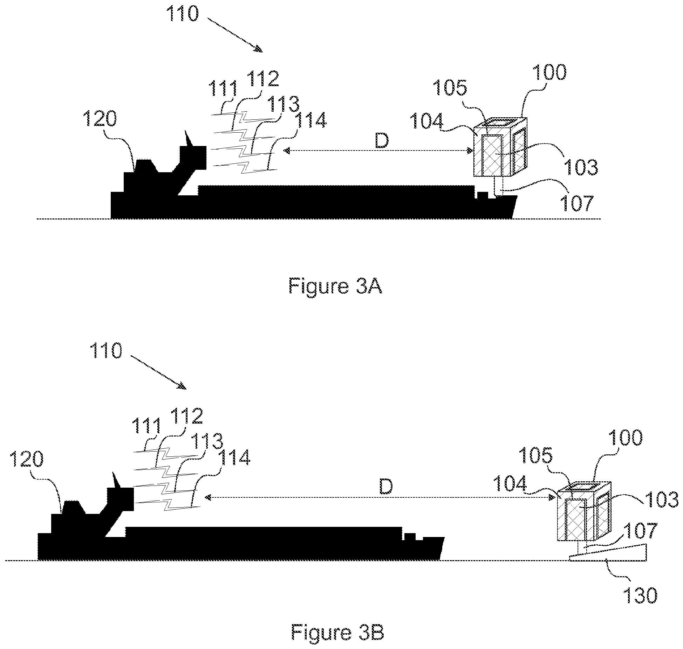

FIG. 3A illustrates a situational awareness system 110 and a vessel 120 comprising an apparatus 100 according to an embodiment. The situational awareness system 110 comprises a plurality of situational awareness sensors 111, 112, 113, 114 which are disposed on the vessel. In this exemplary embodiment, the sensors comprise a lidar sensor 111, a camera 112, a thermographic camera 113 and a night vision camera 114. Various combinations of the sensors can be contemplated. The vessel may be autonomous or remote-controlled.

At least one apparatus 100, which may be similar to the embodiment shown in FIGs. 1A and 1B, is disposed on the vessel at a general distance D of one or more of the sensors. The distance D may be fixed. The exact distances at which each of the sensors 111, 112, 113, 114 is located from the apparatus 100 may naturally differ from each other to some extent depending on the locations of the sensors. However, the apparatus 100 could also be any embodiment of the apparatus described in this specification, such as the embodiment described in the context of FIGs. 3A to 3C. The apparatus 100 is mounted to the vessel using the support member 107. Although only one apparatus 100 is shown in the FIG., two or more apparatuses could also be disposed on the vessel.

With reference to FIGs. 1A and 1B, the first area 103, the second area 104 and the third area 105 are configured to reflect incident electromagnetic radiation to the sensors 111, 112, 113, 114. The reflected electromagnetic radiation may be within one or more of the infrared, visible and ultraviolet ranges, so that it is detectable by at least one of the sensors 111, 112, 113, 114 at any given external conditions. For example, during daytime, ambient light or, in some embodiments, electromagnetic radiation emitted towards the apparatus 100 from a suitable source, may be reflected by the apparatus by one or more of the lateral faces 102 and one or more of the areas 103, 104, 105. As the materials forming the areas 103, 104, 105 have reflectivity spectra that may differ from each other with respect to at least one wavelength or at least one wavelength range, the sensors, such as the camera 112, will be capable of detecting the electromagnetic radiation reflected by the areas, assuming they are within the range detected by the camera, e.g. within the range of visible light (possibly depending to some extent on the properties of the camera). At lower light conditions, such as during nighttime, ambient light may be very low. At such conditions, at least the night vision camera 114 will be capable of providing situational awareness data, and its capability can be assessed and or measured based on electromagnetic radiation reflected by the third area(s) 105 at a suitable intensity for the night vision camera 114.

Radiation reflected by the apparatus 100 may be detected by the sensors 111, 112, 113, 114, which may form an image based on the reflected radiation detected. As the geometry of the apparatus 100 is known, the sensor data can be used to assess e.g. by comparing the response of the sensors to a reference.

The embodiment of FIG. 3B differs from that shown in FIG. 3A at least in that the apparatus 100 is disposed at a fixed location. In this embodiment, the apparatus 100 is disposed ashore, i.e. at land 130. However, in other embodiments, the situational awareness system 110 may comprise two or more apparatuses 100, of which at least one may be disposed on the vessel 120 and at least one at a fixed location. Additionally or alternatively, the apparatus 100 or a second apparatus may be disposed e.g. on a buoy. The apparatus(es) 100 disposed at a fixed location may have different properties, e.g. geometries and/or materials having different reflectivity spectra, from the apparatus(es) disposed on the vessel, such that it is possible to identify them. Additionally or alternatively, the apparatus 100 or a second apparatus 100 may be disposed e.g. on a second vessel.

In this embodiment, the general distance D between the apparatus 100 and the sensors 111, 112, 113, 114 may vary depending on the distance of the vessel 120 from the fixed location, in this case land 130. A vessel, such as a ferry, sailing intermittently or at regular intervals to the shore 130 may thus be, intermittently or at regular intervals, at the general distance D of the apparatus 100 or at a distance approximately the same as the general distance D. The capabilities of its sensors may thus be regularly or intermittently assessed and/or measured when at shore 130 or when its sensors are disposed approximately at the distance D from the apparatus 100.

The capability of the situational awareness sensors 111, 112, 113, 114 may be periodically or intermittently assessed and/or measured using the apparatus and the situational awareness system. During the operation of the situational awareness system and/or the vessel 120, the capability of the situational awareness sensors 111, 112, 113, 114 may be assessed and/or measured e.g. at regular or irregular intervals ranging from about 10 seconds to about 10 minutes, for example at intervals of about 1 minute.

Other aspects of the embodiment shown in FIG. 3B may be generally similar to those of the embodiment shown in FIG. 3A.

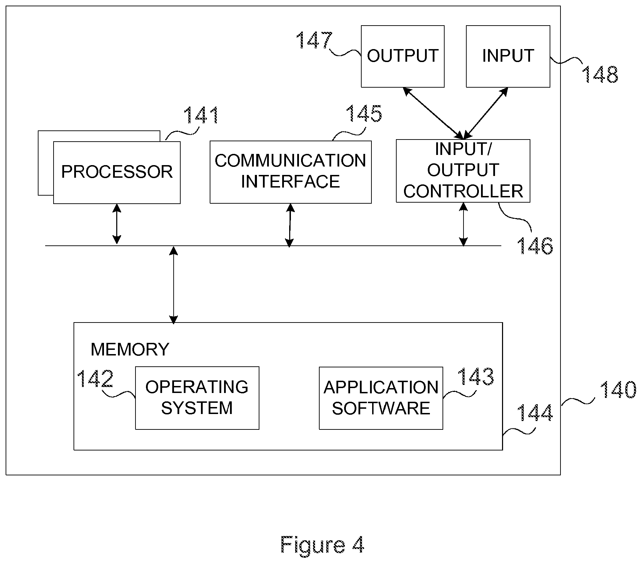

FIG. 4 illustrates an embodiment of components of a computing apparatus 140, i.e. a computer, which may be implemented as a part of an electronic device according to one or more embodiments described in this specification. The computing apparatus 140 comprises one or more processors 141 which may be microprocessors, controllers or any other suitable type of processors for processing computer executable instructions to control the operation of the situational awareness system 110. Platform software comprising an operating system 142 or any other suitable platform software may be provided on the apparatus 140 to enable application software 143 to be executed. According to an embodiment, the calculation of the capabilities of the two or more sensors 111, 112, 113, 114 may be accomplished by software. Furthermore, it may receive information from the sensors 111, 112, 113, 114 regarding the distance D, the intensity of the electromagnetic radiation detected by the sensors, the dimensions of the at least two or three areas 103, 104, 105 and/or other information. Consequently, it may convert this information into the capabilities of the sensors or to an estimate of the capabilities. For instance, the capability for a sensor may be calculated as a percentage of reference capability at a given distance, optionally for an apparatus of given measurements. Individual sensor capabilities may further be added to an index or to a "traffic lights" type of system indicating the total level of situational awareness. These can be further combined with weather predictions, route planning data and/or other data, for instance for determining whether it is safe to enter a certain location with the vessel, or whether the operation of the vessel is safe at its current state or a future state.

Computer executable instructions or program code may be provided using any computer-readable media that are accessible by the computing apparatus 140. Computer-readable media may include, for example, computer storage media such as a memory 144 and communications media. Computer storage media, such as a memory 144, include volatile and non-volatile, removable and non-removable media implemented in any method or technology for storage of information such as computer readable instructions, program code, data structures, program modules or other data. Computer storage media include, but are not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing apparatus. In contrast, communication media may embody computer readable instructions, data structures, program modules, or other data in a modulated data signal, such as a carrier wave, or other transport mechanism. As defined herein, computer storage media do not include communication media. Therefore, a computer storage medium should not be interpreted to be a propagating signal per se. Propagated signals per se are not examples of computer storage media. Although the computer storage medium (the memory 144) is shown within the computing apparatus 140, it will be appreciated by a person skilled in the art, that the storage may be distributed or located remotely and accessed via a network or other communication link (e.g. using a communication interface 145).

The computing apparatus 140 may comprise an input/output controller 146 configured to output information to one or more output devices 147, for example a display or a speaker, which may be separate from or integral to the electronic device. The input/output controller 146 may also be configured to receive and process an input from one or more input devices 146, for example, a keyboard, a microphone or a touchpad. In one embodiment, the output device 147 may also act as the input device. An example of such a device may be a touch sensitive display. The input/output controller 146 may also output data to devices other than the output device, e.g. a locally connected printing device.

The functionality described herein can be performed, at least in part, by one or more hardware logic components. According to an embodiment, the computing apparatus 140 is configured by the program code when executed by the processor 141 to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Program-specific Standard Products (ASSPs), System-on-a-chip systems (SOCs), Complex Programmable Logic Devices (CPLDs), Graphics Processing Units (GPUs).

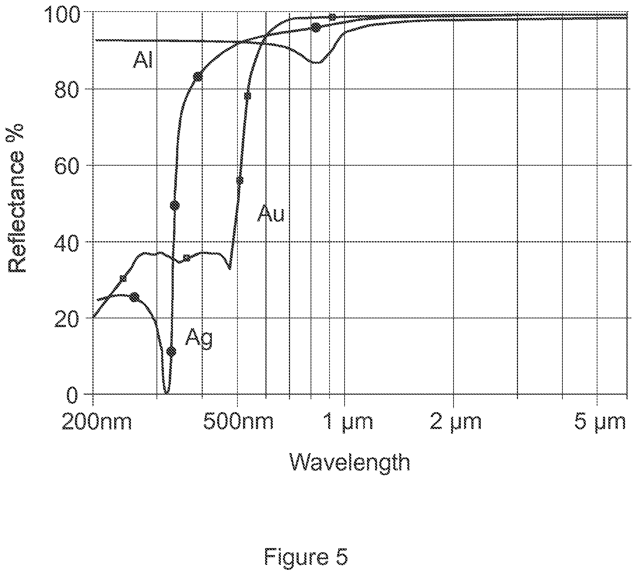

Figure 5 illustrates the reflectance spectra of aluminium (Al), silver (Ag) and gold (Au). Although Fig. 5 shows reflectance, the reflectivities of the materials are similar. Aluminium shows high reflectance within all wavelength ranges shown (200 nm to 5 pm), which includes wavelengths of the ultraviolet, visible and infrared ranges. Gold and silver have lower reflectances in the the less than 500 nm range. Although not shown in Fig. 5, copper has a reflectance spectrum somewhat similar to gold, i.e. lower reflectance in the less than 600 nm range.

Although not shown in Fig. 5, hybrid pigmentation based materials may have reflectance of about 43% at 750 nm and about 75% at 850 nm. Their reflectance at 750 nm is higher, at about 52%, and at 850 nm, about 86%. Further, an exemplary dielectric coating may have a reflectance of 99.86 % at 0° at a wavelength of 610-657 nm. Various dielectric coatings are available with suitable reflectances within the infrared and/or ultraviolet ranges.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items. The term "comprising" is used in this specification to mean including the feature(s) or act(s) followed thereafter, without excluding the presence of one or more additional features or acts.

## Claims

1. An apparatus (100) for assessing and/or measuring the capability of at least two different situational awareness sensors (111, 112, 113, 114), wherein the at least two situational awareness sensors comprise at least two of a lidar sensor (111), a camera (112), a thermographic camera (113) or a night vision camera (114);
wherein the apparatus has a face (102) having at least two areas (103, 104, 105) formed of at least two different materials, wherein
the at least two materials have reflectivity spectra that differ from each other with respect to at least one wavelength or at least one wavelength range within the infrared, visible and/or ultraviolet electromagnetic radiation range,
the at least two areas thereby being configured to reflect incident electromagnetic radiation within the infrared, visible and/or ultraviolet range to the at least two sensors, at least a part of the reflected electromagnetic radiation being detectable by the at least two sensors, **characterized in that**
the at least two different materials have thicknesses of at least 0.5 mm; and wherein
the apparatus has a face (102) having at least three areas (103, 104, 105) formed of at least three different materials, wherein
the at least three materials have reflectivity spectra that differ from each other with respect to at least one wavelength or at least one wavelength range within the infrared, visible and/or ultraviolet electromagnetic radiation range,
the at least three areas thereby being configured to reflect incident electromagnetic radiation within the infrared, visible and/or ultraviolet range to the at least two situational awareness sensors (111, 112, 113, 114), at least a part of the reflected electromagnetic radiation being detectable by the at least two sensors;
the apparatus is suitable for assessing and/or measuring the capability of at least three situational awareness sensors comprising a night vision camera (114) and at least two of a lidar sensor (111), a camera (112) and a thermographic camera (113); and wherein
at least one of the at least three materials is configured to reflect electromagnetic radiation of a wavelength range and at an intensity that is detectable by the night vision camera.

2. An apparatus according to claim 1, wherein the at least two different materials have thicknesses of at least 1 mm, or at least 1.5 mm, or at least 2 mm, or at least 5 mm, or at least 10 mm, or at least 20 mm.

3. The apparatus according to claim 1 or 2, wherein the at least one material configured to reflect electromagnetic radiation of a wavelength range and at an intensity that is detectable by the night vision camera is retroreflective.

4. The apparatus according to any one of claims 1 - 3, wherein the at least one material configured to reflect electromagnetic radiation of a wavelength range and at an intensity that is detectable by the night vision camera has a thickness of at least 0.5 mm.

5. The apparatus according to any one of claims 1 to 4, wherein the apparatus comprises a plurality of lateral faces (102), each lateral face having the at least two or three areas (103, 104, 105) formed of the at least two or three different materials; wherein the dimensions of each of the lateral faces are the same, and the dimensions and the locations of at least two or three areas at each lateral face are the same.

6. The apparatus according to any one of claims 1 to 5, wherein the apparatus has a generally rectangular, pentagonal or hexagonal cross-section.

7. The apparatus according to any one of claims 1 to 6, wherein the at least two materials comprise at least two of copper, aluminium, gold, silver, or any combinations or alloys thereof, plexiglas, hybrid pigmentation, dielectric coating material, or a phase-conjugate mirror material, wherein the copper, aluminium, gold, silver or any combination or alloy thereof is optionally polished.

8. The apparatus according to any one of claims 4 to 7, wherein the at least one material configured to reflect electromagnetic radiation of a wavelength range that is detectable by the night vision camera comprises or is at least one of radium strip, 3M reflector, or any combination thereof.

9. The apparatus according to any one of claims 1 to 8, wherein the apparatus comprises means (108) for de-icing and/or cleaning the apparatus.

10. A situational awareness system (110), comprising
at least two different situational awareness sensors (111, 112, 113, 114), wherein the at least two situational awareness sensors comprise at least two of a lidar sensor (111), a camera (112), a thermographic camera (113) or a night vision camera (114); and
an apparatus (100) as defined in any one of claims 1 - 9.

11. The situational awareness system according to claim 10, wherein the apparatus (100) is disposed at a fixed location, such as ashore (130) or on a buoy.

12. The situational awareness system according to claim 10 or 11, wherein the situational awareness system (110) further comprises
a computer (140) comprising: at least one processor (141), and at least one memory (144) comprising computer program code, the at least one memory and the computer program code configured to, with the at least one processor, cause the computer to at least perform:
receive data from the at least two sensors (111, 112, 113, 114); and calculate the capabilities of the at least two situational awareness sensors based on the received data.

13. A vessel (120) comprising an apparatus (100) as defined in any one of claims 1 to 9 or the situational awareness system (110) according to any one of claims 10 to 12.

14. A method for assessing and/or measuring the capability of at least two different situational awareness sensors (111, 112, 113, 114), wherein the at least two situational awareness sensors comprise at least two of a lidar sensor (111), a camera (112), a thermographic camera (113) or a night vision camera (114), **characterized in that** the method comprises
detecting by the at least two different situational awareness sensors at least a part of electromagnetic radiation within the infrared, visible and/or ultraviolet range reflected by an apparatus (100) according to any one of claims 1 to 9;
receiving data from the at least two different situational awareness sensors, and
assessing and/or measuring the capability of the at least two situational awareness sensors based on the received data.

## Patentansprüche

1. Vorrichtung (100) zum Beurteilen und/oder Messen der Fähigkeit von mindestens zwei verschiedenen Situationswahrnehmungssensoren (111, 112, 113, 114), wobei die mindestens zwei Situationswahrnehmungssensoren mindestens zwei von einem Lidarsensor (111), einer Kamera (112), einer Wärmebildkamera (113) oder einer Nachtsichtkamera (114) umfassen;
wobei die Vorrichtung eine Fläche (102) mit mindestens zwei Bereichen (103, 104, 105) aufweist, die aus mindestens zwei verschiedenen Materialien gebildet sind, wobei
die mindestens zwei Materialien Reflexionsspektren aufweisen, die sich in Bezug auf mindestens eine Wellenlänge oder mindestens einen Wellenlängenbereich innerhalb des infraroten, sichtbaren und/oder ultravioletten elektromagnetischen Strahlungsbereichs voneinander unterscheiden,
die mindestens zwei Bereiche dabei eingerichtet sind zum Reflektieren von einfallender elektromagnetischer Strahlung im infraroten, sichtbaren und/oder ultravioletten Bereich zu den mindestens zwei Sensoren, wobei mindestens ein Teil der reflektierten elektromagnetischen Strahlung durch die mindestens zwei Sensoren detektierbar ist, **dadurch gekennzeichnet, dass**
die mindestens zwei unterschiedlichen Materialien Dicken von mindestens 0,5 mm aufweisen; und wobei
die Vorrichtung eine Fläche (102) mit mindestens drei Bereichen (103, 104, 105) aufweist, die aus mindestens drei verschiedenen Materialien gebildet sind, wobei
die mindestens drei Materialien Reflexionsspektren aufweisen, die sich in Bezug auf mindestens eine Wellenlänge oder mindestens einen Wellenlängenbereich innerhalb des infraroten, sichtbaren und/oder ultravioletten elektromagnetischen Strahlungsbereichs voneinander unterscheiden,
wobei die mindestens drei Bereiche eingerichtet sind zum Reflektieren von einfallender elektromagnetischer Strahlung im infraroten, sichtbaren und/oder ultravioletten Bereich zu den mindestens zwei Situationswahrnehmungssensoren (111, 112, 113, 114), wobei mindestens ein Teil der reflektierten elektromagnetischen Strahlung durch die mindestens zwei Sensoren detektierbar ist;
die Vorrichtung geeignet ist, die Fähigkeit von mindestens drei Situationswahrnehmungssensoren zu beurteilen und/oder zu messen, die eine Nachtsichtkamera (114) und mindestens zwei von einem Lidarsensor (111), einer Kamera (112) und einer Wärmebildkamera 113) umfassen; und wobei
mindestens eines der mindestens drei Materialien eingerichtet ist zum Reflektieren von elektromagnetischer Strahlung in einem Wellenlängenbereich und mit einer Intensität, die durch die Nachtsichtkamera detektierbar ist.

2. Vorrichtung nach Anspruch 1, wobei die mindestens zwei unterschiedlichen Materialien eine Dicke von mindestens 1 mm oder mindestens 1,5 mm oder mindestens 2 mm oder mindestens 5 mm oder mindestens 10 mm oder mindestens 20 mm aufweisen.

3. Vorrichtung nach Anspruch 1 oder 2, wobei das mindestens eine Material, das eingerichtet ist zum Reflektieren von elektromagnetischer Strahlung in einem Wellenlängenbereich und mit einer Intensität, die durch die Nachtsichtkamera detektierbar ist, retroreflektierend ist.

4. Vorrichtung nach einem der Ansprüche 1 bis 3, wobei das mindestens eine Material, das eingerichtet ist zum Reflektieren von elektromagnetischer Strahlung eines Wellenlängenbereichs und mit einer Intensität, die durch die Nachtsichtkamera detektierbar ist, eine Dicke von mindestens 0,5 mm aufweist.

5. Vorrichtung nach einem der Ansprüche 1 bis 4, wobei die Vorrichtung eine Vielzahl von Seitenflächen (102) umfasst, wobei jede Seitenfläche die mindestens zwei oder drei Bereiche (103, 104, 105) aufweist, die aus den mindestens zwei oder drei verschiedenen Materialien gebildet sind; wobei die Abmessungen jeder der Seitenflächen gleich sind und die Abmessungen und die Positionen der mindestens zwei oder drei Bereiche an jeder Seitenfläche gleich sind.

6. Vorrichtung nach einem der Ansprüche 1 bis 5, wobei die Vorrichtung einen allgemein rechteckigen, fünfeckigen oder sechseckigen Querschnitt aufweist.

7. Vorrichtung nach einem der Ansprüche 1 bis 6, wobei die mindestens zwei Materialien mindestens zwei der folgenden Materialien umfassen: Kupfer, Aluminium, Gold, Silber oder beliebige Kombinationen oder Legierungen davon, Plexiglas, Hybridpigmentierung, dielektrisches Beschichtungsmaterial oder ein phasenkonjugiertes Spiegelmaterial, wobei das Kupfer, Aluminium, Gold, Silber oder beliebige Kombinationen oder Legierungen davon optional poliert ist.

8. Vorrichtung nach einem der Ansprüche 4 bis 7, wobei das mindestens eine Material, das eingerichtet zum Reflektieren von elektromagnetische Strahlung in einem Wellenlängenbereich, der durch die Nachtsichtkamera detektierbar ist, mindestens einen Radiumstreifen, einen 3M-Reflektor oder eine beliebige Kombination davon umfasst oder daraus besteht.

9. Vorrichtung nach einem der Ansprüche 1 bis 8, wobei die Vorrichtung Mittel (108) zum Enteisen und/oder Reinigen der Vorrichtung umfasst.

10. Situationswahrnehmungssystem (110), umfassend
mindestens zwei verschiedene Situationswahrnehmungssensoren (111, 112, 113, 114), wobei die mindestens zwei Situationswahrnehmungssensoren mindestens zwei von einem Lidarsensor (111), einer Kamera (112), einer Wärmebildkamera (113) oder einer Nachtsichtkamera (114) umfassen; und
eine Vorrichtung (100) wie in einem der Ansprüche 1 - 9 definiert.

11. Situationswahrnehmungssystem nach Anspruch 10, wobei die Vorrichtung (100) an einem festen Ort, beispielsweise an Land (130) oder auf einer Boje, angeordnet ist.

12. Situationswahrnehmungssystem nach Anspruch 10 oder 11, wobei das Situationswahrnehmungssystem (110) ferner umfasst
einen Computer (14) umfassend: mindestens einen Prozessor (141) und mindestens einen Speicher (144), der Computerprogrammcode umfasst, wobei der mindestens eine Speicher und der Computerprogrammcode eingerichtet sind, dass sie mit dem mindestens einen Prozessor den Computer veranlassen, mindestens Folgendes durchzuführen:
Empfangen von Daten von den mindestens zwei Sensoren (111, 112, 113, 114); und Berechnen der Fähigkeiten der mindestens zwei Situationswahrnehmungssensoren basierend auf den empfangenen Daten.

13. Schiff (120) mit einer Vorrichtung (100) nach einem der Ansprüche 1 bis 9 oder dem Situationswahrnehmungssystem (110) nach einem der Ansprüche 10 bis 12.

14. Verfahren zum Beurteilen und/oder Messen der Fähigkeit von mindestens zwei verschiedenen Situationswahrnehmungssensoren (111, 112, 113, 114), wobei die mindestens zwei Situationswahrnehmungssensoren mindestens zwei von einem Lidarsensor (111), einer Kamera (112), einer Wärmebildkamera (113) oder einer Nachtsichtkamera (114) umfassen, **dadurch gekennzeichnet, dass** das Verfahren umfasst
Detektieren, durch die mindestens zwei verschiedenen Situationswahrnehmungssensoren, mindestens eines Teils von elektromagnetischer Strahlung im infraroten, sichtbaren und/oder ultravioletten Bereich, die von einer Vorrichtung (100) nach einem der Ansprüche 1 bis 9 reflektiert wird;
Empfangen von Daten von den mindestens zwei verschiedenen Situationswahrnehmungssensoren, und
Beurteilen und/oder Messen der Fähigkeit der mindestens zwei Situationswahrnehmungssensoren basierend auf den empfangenen Daten.

## Revendications

1. Appareil (100) destiné à évaluer et / ou à mesurer la capacité d'au moins deux capteurs de conscience de situation différents (111, 112, 113, 114), dans lequel les au moins deux capteurs de conscience de situation comprennent au moins deux capteurs parmi un capteur à lidar (111), une caméra (112), une caméra thermographique (113), ou une caméra à vision nocturne (114) ;
dans lequel l'appareil présente une face (102) qui présente au moins deux zones (103, 104, 105) constituées de deux matériaux différents au moins, dans lequel
les deux matériaux au moins présentent des spectres de réflectivité qui diffèrent l'un de l'autre en ce qui concerne au moins une longueur d'onde, ou au moins une plage de longueurs d'onde dans une plage de rayonnement électromagnétique infrarouge, visible et / ou ultraviolet,
les deux zones au moins étant configurées de ce fait pour réfléchir un rayonnement électromagnétique incident sur les deux capteurs au moins, dans la plage infrarouge, visible et / ou ultraviolette, une partie au moins du rayonnement électromagnétique réfléchi pouvant être détecté par les au moins deux capteurs, **caractérisé en ce que**
l'épaisseur des deux matériaux différents au moins, est au moins égale à 0,5 mm ; et dans lequel
l'appareil présente une face (102) qui présente au moins trois zones (103, 104, 105) constituées de trois matériaux différents au moins, dans lequel
les trois matériaux au moins présentent des spectres de réflectivité qui diffèrent l'un de l'autre en ce qui concerne au moins une longueur d'onde, ou au moins une plage de longueurs d'onde dans une plage de rayonnement électromagnétique infrarouge, visible et / ou ultraviolet,
les trois zones au moins étant configurées de ce fait pour réfléchir un rayonnement électromagnétique incident sur les deux capteurs de conscience de situation (111, 112, 113, 114) au moins, dans la plage infrarouge, visible et / ou ultraviolette, une partie au moins du rayonnement électromagnétique réfléchi pouvant être détecté par les au moins deux détecteurs ;
l'appareil est adapté pour évaluer et / ou mesurer la capacité d'au moins trois capteurs de conscience de situation comprenant une caméra à vision nocturne (114), et au moins deux capteurs parmi un capteur à lidar (111), une caméra (112), et une caméra thermographique (113) ; et dans lequel
l'un au moins des au moins trois matériaux est configuré afin de réfléchir un rayonnement électromagnétique dans une plage de longueurs d'onde, et avec une intensité qui peut être détectée par la caméra à vision nocturne.

2. Appareil selon la revendication 1, dans lequel les deux matériaux différents au moins présentent des épaisseurs au moins égales à 1 mm, ou au moins égales à 1,5 mm, ou au moins égales à 2 mm, ou au moins égales à 5 mm, ou au moins égales à 10 mm, ou au moins égales à 20 mm.

3. Appareil selon la revendication 1 ou 2, dans lequel l'un au moins des matériaux configurés pour réfléchir un rayonnement électromagnétique dans une plage de longueurs d'onde, et avec une intensité qui peut être détectée par la caméra à vision nocturne, est rétroréfléchissant.

4. Appareil selon l'une quelconque des revendications 1 à 3, dans lequel l'un au moins des matériaux configurés pour réfléchir un rayonnement électromagnétique dans une plage de longueurs d'onde, et avec une intensité qui peut être détectée par la caméra à vision nocturne, présente une épaisseur au moins égale à 0,5 mm.

5. Appareil selon l'une quelconque des revendications 1 à 4, dans lequel l'appareil comprend une pluralité de faces latérales (102), chaque face latérale présentant au moins deux ou trois zones (103, 104, 105) constituées des au moins deux ou trois matériaux différents ; dans lequel les dimensions de chacune des faces latérales sont identiques, et les dimensions et les emplacements des au moins deux ou trois zones au niveau de chaque face latérale, sont identiques.

6. Appareil selon l'une quelconque des revendications 1 à 5, dans lequel la section transversale de l'appareil est en général rectangulaire, pentagonale, ou hexagonale.

7. Appareil selon l'une quelconque des revendications 1 à 6, dans lequel les deux matériaux au moins comprennent au moins deux matériaux parmi le cuivre, l'aluminium, l'or, l'argent, ou toutes associations ou alliages de ceux-ci, le plexiglas, une pigmentation hybride, un matériau de revêtement diélectrique, ou un matériau miroir à phase conjuguée, dans lequel le cuivre, l'aluminium, l'or, l'argent ou toutes associations ou alliages de ceux-ci, sont éventuellement polis.

8. Appareil selon l'une quelconque des revendications 4 à 7, dans lequel l'un au moins des matériaux configurés pour réfléchir un rayonnement électromagnétique dans une plage de longueurs d'onde que peut détecter la caméra à vision nocturne, comprend, ou est, l'un au moins d'une bande de radium, d'un réflecteur 3M, ou n'importe quelle association de ceux-ci.

9. Appareil selon l'une quelconque des revendications 1 à 8, dans lequel l'appareil comprend des moyens (108) destinés à dégivrer et / ou à nettoyer l'appareil.

10. Système de conscience de situation (110), comprenant
au moins deux capteurs de conscience de situation différents (111, 112, 113, 114), dans lequel les au moins deux capteurs de conscience de situation comprennent au moins deux capteurs parmi un capteur à lidar (111), une caméra (112), une caméra thermographique (113), ou une caméra à vision nocturne (114) ; et
un appareil (100) selon l'une quelconque des revendications 1 à 9.

11. Système de conscience de situation selon la revendication 10, dans lequel l'appareil (100) est disposé à un emplacement fixe, tel qu'à terre (130) ou sur une bouée.

12. Système de conscience de situation selon la revendication 10 ou 11, dans lequel le système de conscience de situation (110) comprend en outre
un ordinateur (140) comprenant : au moins un processeur (141), et au moins une mémoire (144) comprenant un code de programme informatique, l'une au moins des mémoires et le code de programme informatique étant configurés, avec l'un au moins des processeurs, pour faire exécuter par l'un au moins des ordinateurs :
une réception de données en provenance des deux capteurs (111, 112, 113, 114) au moins ; et
le calcul des capacités des au moins deux capteurs de conscience de situation sur la base des données reçues.

13. Navire (120) comprenant un appareil (100) selon l'une quelconque des revendications 1 à 9, ou le système de conscience de situation (110) selon l'une quelconque des revendications 10 à 12.

14. Procédé destiné à évaluer et / ou à mesurer la capacité d'au moins deux capteurs de conscience de situation différents (111, 112, 113, 114), dans lequel les au moins deux capteurs de conscience de situation comprennent au moins deux capteurs parmi un capteur à lidar (111), une caméra (112), une caméra thermographique (113), ou une caméra à vision nocturne (114), **caractérisé en ce que** le procédé comprend les étapes suivantes
faire détecter, par les au moins deux capteurs de conscience de situation différents, une partie au moins d'un rayonnement électromagnétique dans la plage infrarouge, visible et / ou ultraviolette, réfléchi par un appareil (100) selon l'une quelconque des revendications 1 à 9 ;
recevoir des données en provenance des au moins deux capteurs de conscience de situation différents, et
évaluer, et / ou mesurer la capacité des au moins deux capteurs de conscience de situation sur la base des données reçues.
